# EUROPEAN PATENT SPECIFICATION

(11) **EP 1 375 255 B1**
(45) Date of publication and mention of the grant of the patent: **09.11.2005**
(21) Application number: 03013834.1
(22) Date of filing: 18.06.2003
(51) Int. Cl.: B60R 13/04, F16B 5/12

(54) **Structure of coupling vehicle body exterior parts to each other**
Befestigungsstruktur zum Verbinden von Fahrzeugkarosserieteile
Structure de connexion pour des éléments de carosserie l'un à l'autre

(30) Priority: 19.06.2002 JP 2002178373
(43) Date of publication of application: 02.01.2004
(73) Proprietor: HONDA GIKEN KOGYO KABUSHIKI KAISHA, Minato-ku, Tokyo (JP); Moriroku Kabushiki Kaisha, Chiyoda-ku, Tokyo (JP)
(72) Inventor: Nakano, Takashi, c/o K. K. Honda Gijutsu Kenkyusho, Wako-shi, Saitama (JP); Yamaguchi, Takayuki, c/o Moriroku K. K., Oura-gun, Gunma (JP); Nakatani, Masanobu, c/o Moriroku K. K., Oura-gun, Gunma (JP)
(74) Representative: Prechtel, Jörg

(56) References cited:
- EP-A- 1 197 393
- FR-A- 2 787 074
- US-A- 5 195 793
- US-A- 5 229 175
- US-B1- 6 276 109

## Description

### BACKGROUND OF THE INVENTION

### FIELD OF THE INVENTION

The present invention relates to a structure of coupling vehicle body exterior parts to each other, in which first and second exterior parts secured at their one-ends to spaced-apart portions of the vehicle body are coupled at the other opposed ends to each other for sliding movement in a given direction.

### DESCRIPTION OF THE RELATED ART

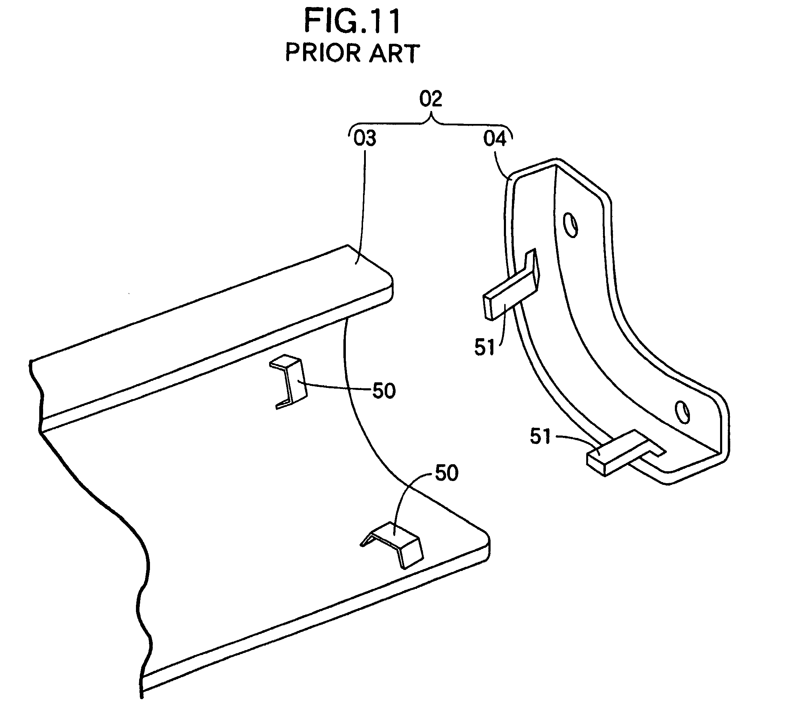

A side sill garnish 02 covering an outer surface of a side sill of a vehicle body will be described with reference to Fig.11 as a generally known conventional structure of coupling vehicle body exterior parts to each other. The side sill garnish 02 comprises a long garnish body 03 secured to a rear end of a side sill (not shown), and a garnish end plate 04 secured to a front fender (not shown). The garnish body 03 and the garnish end plate 04 are coupled to each other by fitting fit bridges 50 with insert pieces 51 formed on inner walls of opposed ends of the garnish body 03 and the garnish end plate 04 for sliding movement in lengthwise directions of the garnish body 03. Thus, the thermal expansion or shrinkage of the garnish body 03 is absorbed by the sliding movements of the coupled portions of the fit bridges 50 and the insert pieces 51.

In the above-described structure, however, each of the fit bridges 50 and the insert pieces 51 has a low rigidity. This is one factor of causing the displacement between the garnish body 03 and the garnish end plate 04 during vibration.

### SUMMARY OF THE INVENTION

Accordingly, it is an object of the present invention to provide a structure of coupling vehicle body exterior parts to each other, wherein a high rigidity is provided to each of coupled portions of a first exterior part such as the above-described garnish body and a second exterior part such as the above-described garnish end plate, so that the displacement between the exterior parts is prevented.

To achieve the above object, according to a first feature of the present invention, there is provided a structure of coupling vehicle body exterior parts to each other, in which first and second exterior parts secured at their one-ends to spaced-apart portions of the vehicle body are coupled at the other opposed ends to each other for sliding movement in give directions, characterized in that first and second support walls are provided on one and the other of the first and second exterior parts to abut against each other for sliding movements in the given direction; a U-shaped grooves is formed in the first support wall to extend in the given direction; and a T-shaped protrusion is formed on the second support wall, so that a neck of the T-shaped protrusion is slidably fitted in the U-shaped groove.

The first and second exterior parts correspond to a garnish body and a garnish end plate respectively in an embodiment of the present invention which will be described hereinafter. The first support walls correspond to a horizontal support wall 20 and a vertical support wall 24 of the garnish body, and the second support walls correspond to a horizontal support wall 20' and a vertical support wall 24' of the garnish end plate.

With the first feature, when the exterior part is thermally expanded or shrunk more largely than the vehicle body is, the thermal expansion or shrinkage can be permitted by relative sliding movement between the U-shaped groove in the first support wall and the T-shaped protrusion of the second support wall, thereby avoiding the generation of an excessive stress in each of the first and second exterior parts. Moreover, the T-shaped protrusion clamps the second support wall without looseness by cooperation with the first support wall integral with the T-shaped protrusion. Therefore, the rigidity of the coupled portions of the first and second support walls is high, and even if the first and second support walls receive a severe vibration, the displacement between the first and second support walls can be prevented.

According to a second feature of the present invention, in addition to the first feature, at least two sets of the first and second support walls are provided on the first and second exterior parts, and abutment surfaces of the first and second support walls in each set are disposed to form a right angle between them.

With the second feature, the abutment surfaces forming the right angle between them restrict the movements of the first and second exterior parts relative to each other in two directions perpendicular to the given direction, whereby the displacement between the first and second exterior parts can be further reliably prevented.

According to a third feature of the present invention, in addition to the first or second feature, small ribs are formed on one of the abutment surfaces of the first and second support walls to resiliently contact with the other abutment surface.

With the third feature, the looseness between the first and second support walls opposed to each other can be reliably eliminated to contribute to an increase in rigidity of coupled portions of the support walls.

The above and other objects, features and advantages of the invention will become apparent from the following description of the preferred embodiment taken in conjunction with the accompanying drawings.

### BRIEF DESCRIPTION OF THE DRAWINGS

Fig.1 is a side view of an automobile employing a structure of coupling vehicle body exterior parts to each other according to the present invention;
Fig.2 is an exploded perspective view of a side sill section in Fig.1;
Fig.3 is a plan view of a side sill garnish;
Fig.4 is a sectional view taken along a line 4-4 in Fig.3;
Fig.5 is a sectional view taken along a line 5-5 in Fig.3;
Fig.6 is a sectional view taken along a line 6-6 in Fig.3;
Fig.7 is a sectional view taken along a line 7-7 in Fig.3;

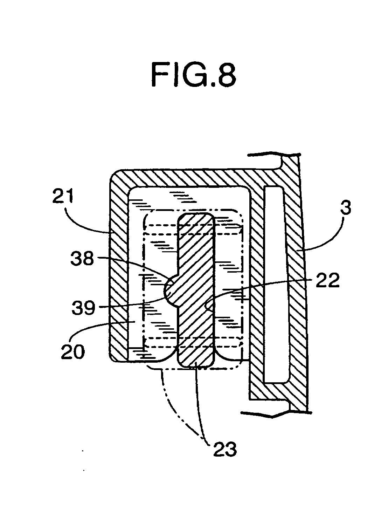

Fig.8 is a sectional view taken along a line 8-8 in Fig.7;

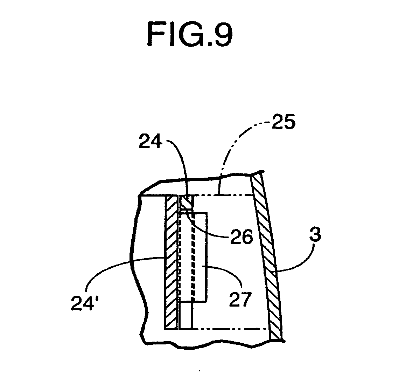

Fig.9 is a sectional view taken along a line 9-9 in Fig.7;
Fig.10 is an exploded perspective view taken from inside the side sill garnish; and
Fig.11 is a conventional structure of coupling vehicle body exterior parts to each other.

### DESCRIPTION OF THE PREFERRED EMBODIMENT

The present invention will now be described by way of a preferred embodiment with reference to the accompanying drawings.

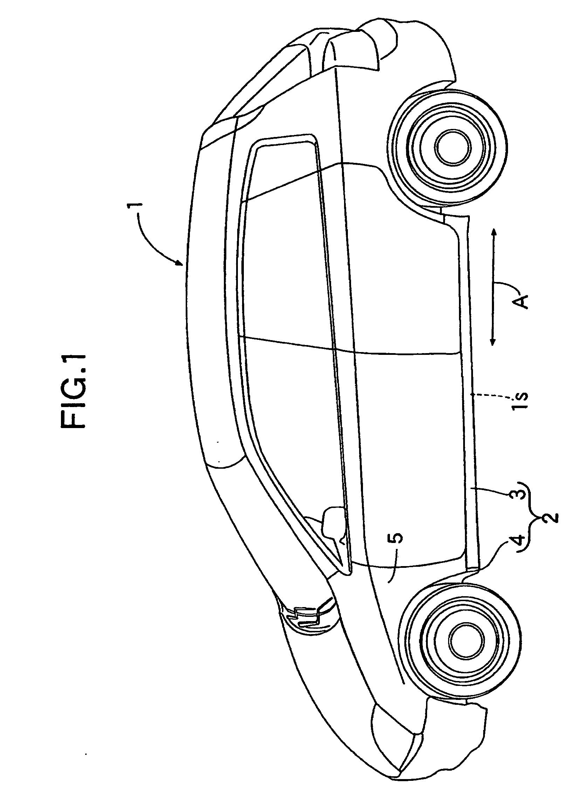

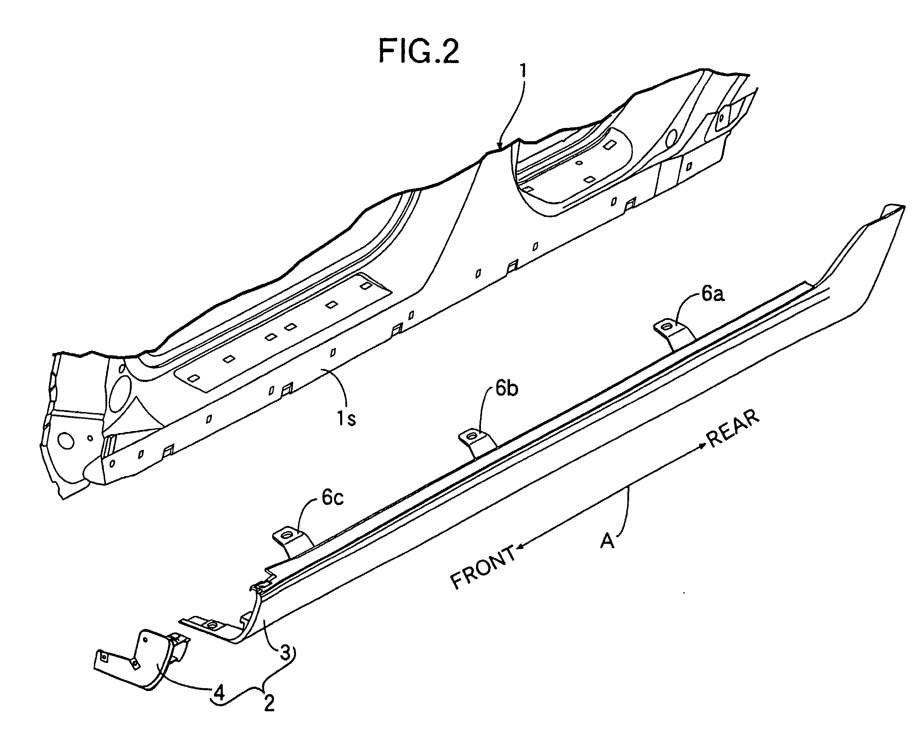

Referring first to Figs.1 and 2, an outer surface of a side sill Is in a vehicle body 1 of an automobile is covered with a side sill garnish 2 made of a synthetic resin. The side sill garnish 2 is comprised of a garnish body 3 secured to a rear end of the side sill Is to cover an outer surface of the side sill Is over the entire length thereof, and a garnish end plate 4 secured to a front fender 5 and coupled to a front end face of the garnish body 3 to cover the front end face of the garnish body 3. Coupled portions of the garnish body 3 and the garnish end plate 4 are constructed so that the relative movement between the garnish body 3 and the garnish end plate 4 are permitted in lengthwise directions A of the side sill garnish 2. The detail of the coupled portions will be described hereinafter. The front fender 5 is secured to the vehicle body 1.

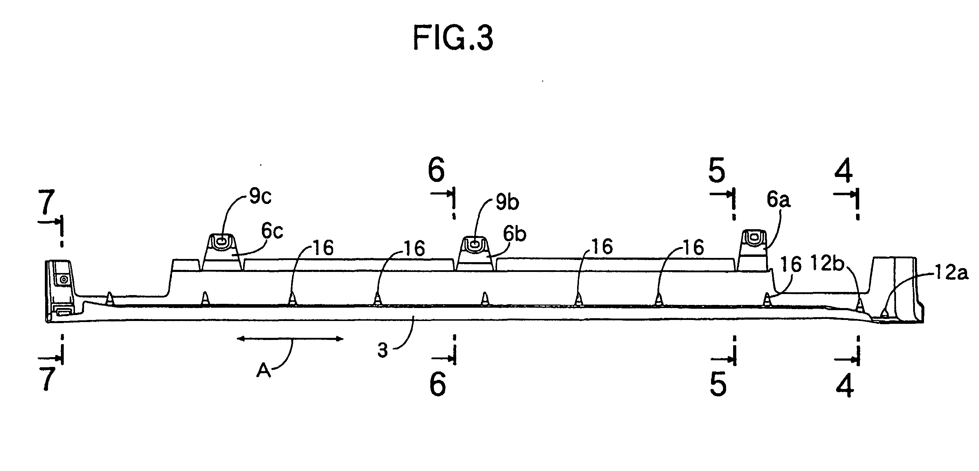

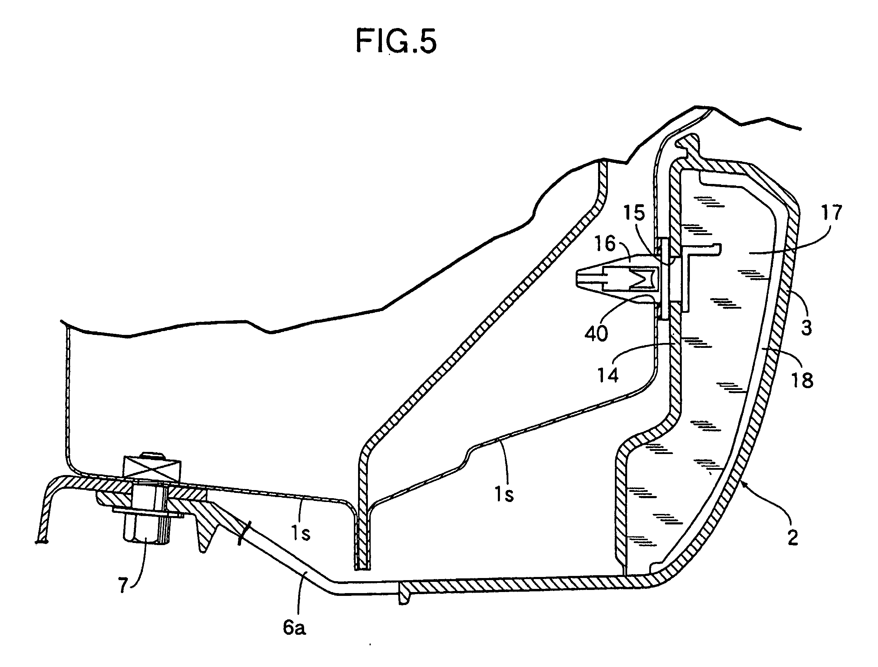

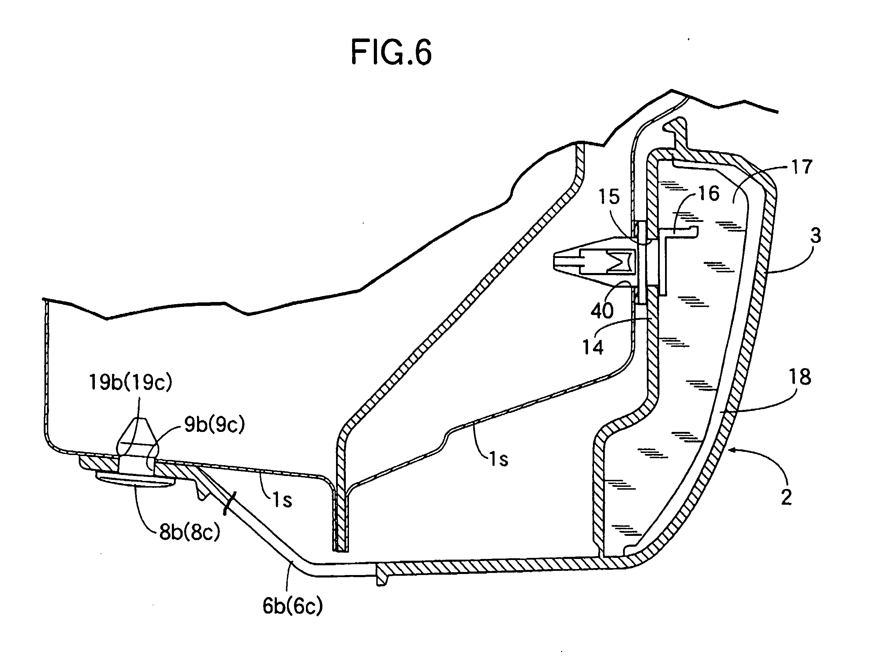

As shown in Figs.3 to 6, a plurality of (three in the illustrated embodiment) stays 6a to 6c arranged in the lengthwise directions A are integrally formed at a lower portion of the garnish body 3. The rearmost stay 6a is secured to a lower surface of the side sill Is by a bolt 7, and the remaining two stays 6b and 6c are mounted to the side sill 1a by inserting and locking clips 8b and 8c fitted in mounting bores 9b and 9c of the stays 6b and 6c into locking bores 19b and 19c in a bottom wall of the side sill 1s. The mounting bores 9b and 9c of the stays 6b and 6c are elongated bores longer in the lengthwise directions of the garnish body 3, so that the slight movements of the clips 8b and 8c are permitted.

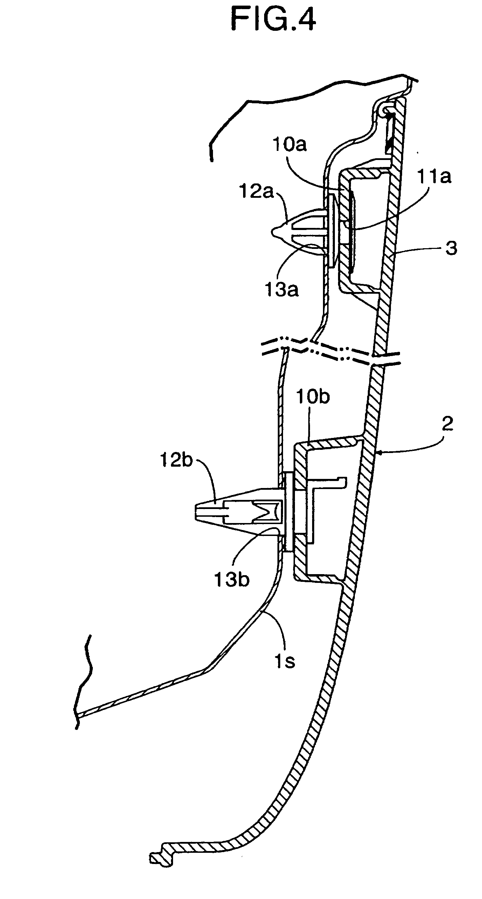

As shown in Figs.3 and 4, a pair of upper and lower mounting bridges 10a and 10b are integrally formed on an inner wall of a rear end of the garnish body 3. Clips 12a and 12b mounted in U-shaped grooves 11a and 11b in the mounting bridges 10a and 10b are inserted into and locked in locking bores 13a and 13b in a sidewall of the side sill 1s.

A large number of mounting walls 14 are formed on an inner wall of an intermediate portion of the garnish body 3 and arranged in the lengthwise directions A of the garnish body 3, to integrally connect upper and lower ends of the garnish body 3 to each other. Clips 16 mounted in U-shaped grooves 15 in the mounting walls 14 are inserted into and locked in a locking bore 40 in the sidewall of the side sill 1a. Each of the U-shaped grooves 15 has an open end opening toward one of the lengthwise directions A of the garnish body 3, so that each of the clips 16 can be mounted thereto from the side and the slight movement of the clip 16 after being mounted is permitted. A rib 17 is integrally formed on a back of each of the mounting walls 14. A gap 18 is provided between the rib 17 and the sidewall of the garnish body 3, so that a sink mark of the rib 17 does not affect an outer side face of the garnish body 3 during formation of the rib 17 by molding.

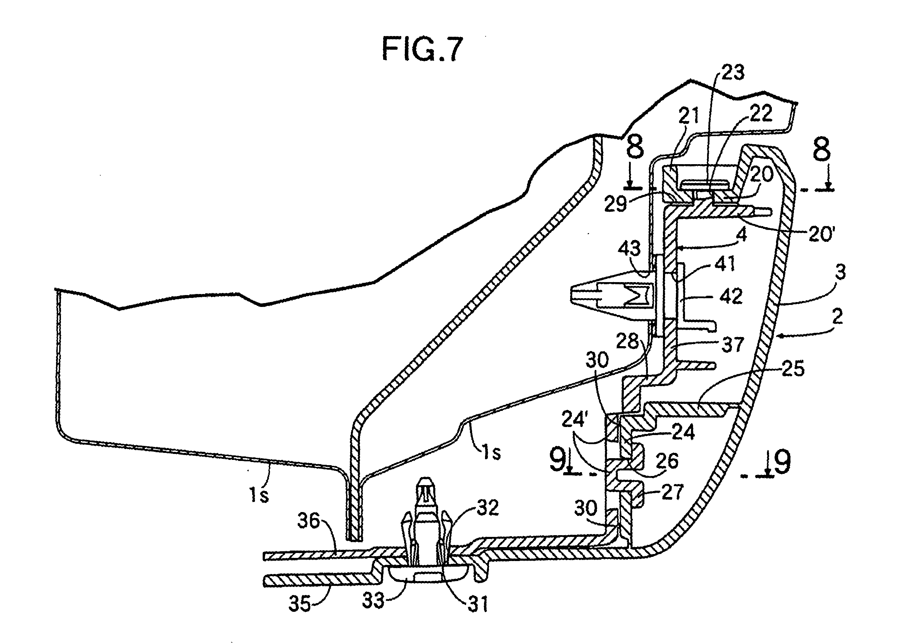

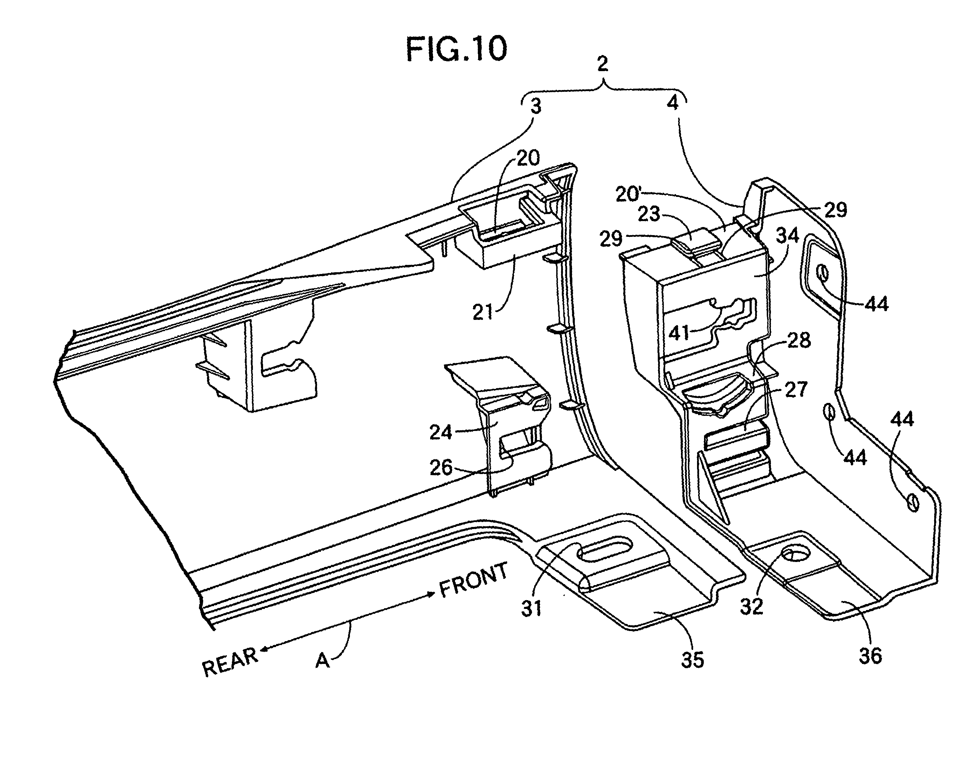

A structure of coupling the garnish body 3 and the garnish end plate 4 to each other will now be described. First, a horizontal support wall 20 is integrally formed on an upper portion of an inner wall at a front end of the garnish body 3 to extend horizontally, as shown in Figs.3, 7 and 10. The horizontal support wall 20 is square as viewed in a plane, and a reinforcing rib 21 rises from a peripheral edge of the horizontal support wall 20. A first U-shaped groove 22 is provided in the horizontal support wall 20 and opens forwards. An arcuate reference positioning recess 38 is provided in an inner side face of the first U-shaped groove 22.

A vertical support wall 24 is integrally formed at a lower portion of the inner wall at the front end of the garnish body 3 to rise vertically from a bottom of the lower portion and to extend in the lengthwise directions A of the garnish body 3. The vertical support wall 24 is connected integrally at its upper end to the sidewall of the garnish body 3 via a connecting wall 25. A second U-shaped groove 26 is also provided in the vertical support wall 24 and opens forwards. A first connecting stay 35 is integrally formed at the front end of the garnish body 3 to protrude from the lower end of the garnish body 3 toward the lower surface of the side sill 1a.

On the other hand, the garnish end plate 4 is integrally formed with: a horizontal support wall 20' extending from an inner wall of an upper end of the garnish end plate 4; a vertical wall 37 extending vertically downwards from an inner end of the horizontal support wall 20'; a vertical support wall 24' connected vertically to a lower end of the vertical wall 37 through a step 28; and a second connecting stay 36 extending from a lower end of the vertical support wall 24' toward the lower surface of the side sill 1s.

An upper surface of the horizontal support wall 20' abuts slidably against a lower surface of the horizontal support wall 20 of the garnish body 3. The horizontal support wall 20' is integrally formed on its upper surface with: a first T-shaped protrusion 23 having a neck slidably fitted in the first U-shaped groove 22; and a plurality of small ribs 29 resiliently contacting with the lower surface of the horizontal support wall 20 of the garnish body 3. A positioning projection 39 capable of being engaged in a reference positioning recess 38 of the first U-shaped groove 22, is formed on the neck of the first T-shaped protrusion 23.

The vertical support wall 24' slidably abuts against the vertical support wall 24 of the garnish body 3. The vertical support wall 24' is integrally formed with a second T-shaped protrusion 27 having a neck slidably fitted in the second U-shaped groove 26. The vertical support wall 24' is also integrally formed with a plurality of small ribs 30 resiliently contacting with a side face of the vertical support wall of the garnish body 3.

The second connecting stay 36 is superposed on an upper surface of the first connecting stay 35 of the garnish body 3, and the connecting stays 35 and 36 are connected to each other for sliding movement in the lengthwise directions A of the garnish body 3 by a clip 33 inserted through an elongated bore 31 provided in the first connecting stay 35 and a circular bore 32 provided in the second connecting stay 36. Further, a U-shaped groove 41 is formed in the vertical wall 37, and a clip 42 mounted in the U-shaped groove 41 is inserted into and locked in a locking bore 43 in the sidewall of the side sill 1s. Each of the U-shaped grooves 22, 26 and 41 has an open end opening toward one of the lengthwise directions A of the garnish body 3 to enable the mounting of each of the T-shaped protrusions 23 and 27 or the clip 42 from a longitudinal direction and to permit the slight longitudinal movement of each of the T-shaped protrusions 23 and 27 or the clip 42 after being mounted.

A plurality of connecting bores 44 are provided in the garnish end plate 4 for coupling the garnish end plate 4 to the front fender 5 by bolts.

The operation of the embodiment will be described below.

To mount the side sill garnish 2 to the side sill 1s, the garnish end plate 4 is first coupled to the garnish body 3 to assemble the side sill garnish 2. More specifically, if the first and second T-shaped protrusions 23 and 27 of the garnish end plate 4 are fitted into the first and second U-shaped grooves 22 and 26 in the garnish body 3, respectively, the horizontal support wall 20' of the garnish end plate 4 is superposed on the lower surface of the horizontal support wall 20 of the garnish body 3 with the small ribs 29 resiliently brought into contact with the lower surface of the horizontal support wall 20, thereby clamping the horizontal support wall 20 by cooperation with an expanded head of the first T-shaped protrusion 23. The vertical support wall 24' of the garnish end plate 4 is also superposed on the side face of the vertical support wall 24 of the garnish body 3 with the small ribs 30 resiliently brought into contact with the side face of the vertical support wall 24, thereby clamping the vertical support wall 24 by cooperation with an expanded head of the second T-shaped protrusion 27. In this case, the positioning projection 39 on the neck of the first T-shaped protrusion 23 is engaged into the reference positioning recess 38 in the first U-shaped groove 22 in the horizontal support wall 20, whereby the reference coupling positions of the garnish body 3 and the garnish end plate 4 are determined. The clip 33 is inserted into the circular bore 32 and the elongated bore 31 in the first and second connecting stays 35 and 36 superposed on each other, thereby connecting the connecting stays 35 and 36 to each other.

After the side sill garnish 2 has been assembled in the above-described manner, the clips 12a, 12b, 16, 8b, 8c and 42 mounted on the various portions of the garnish body 3 and the garnish end plate 4 are inserted into and locked in the corresponding locking bores 13a, 13b, 40, 19b, 19c and 43 in the side sill 1s. Finally, the rearmost stay 6a of the garnish body 3 is secured to the lower surface of the side sill Is by the bolt 7.

Thereafter, the garnish end plate 4 is bolted to the front fender 5 secured to the vehicle body 1 by utilizing the connecting bore 44.

The side sill Is made of a steel plate and the side sill garnish 2 made of the synthetic resin and covering the side sill 1s have coefficients of thermal expansion which are largely different from each other. Therefore, when the temperature of the open air largely changes, the side sill garnish 2 is expanded or shrunk larger than the side sill Is particularly in the lengthwise directions A. At that time, the expansion or shrinkage of the side sill garnish 2 in the lengthwise directions A of the long garnish body 3 is permitted by the relative sliding movements between the first and second U-shaped grooves 22 and 26 in the garnish body 3 and the first and second T-shaped protrusions 23 and 27 engaged in them, because the rear end of the garnish body 3 is fixed to the side sill Is by the bolt 7 and the garnish end plate 4 is bolted to the front fender 5. In addition, the sliding movements occur between the clips 12a, 12b, 16, 8b, 8c and 42 and the U-shaped grooves 11a, 11b, 15, 9b, 9c and 41 having these clips mounted therein, thereby permitting the above-described expansion or shrinkage. As a result, it is possible to avoid the generation of an excessive stress in each of the garnish body 3 and the garnish end plate 4.

Moreover, the first T-shaped protrusion 23 clamps the horizontal support wall 20 of the garnish body 3 by cooperation with the horizontal support wall 20' of the garnish end plate integral with the first T-shaped protrusion 23, and the second T-shaped protrusion 27 also clamps the vertical support wall 24 of the garnish body 3 by cooperation with the vertical support wall 24' of the garnish end plate 4 integral with second T-shaped protrusion 27. Therefore, each of the coupled portions between the horizontal support walls 20 and 20' and between the vertical support walls 24 and 24' has a high rigidity and hence, even if they receive a severe vibration, it is possible to prevent the occurrence of the displacement between the garnish body 3 and the garnish end plate 4.

In this case, the small ribs 29 and 30 formed on the horizontal support wall 20' and the vertical support wall 24' of the garnish end plate 4 resiliently contact with the horizontal support wall 20 and the vertical support wall 24 of the garnish body 3, respectively. Therefore, the looseness between the opposed support walls 20 and 20'; 24 and 24' can be reliably eliminated to largely contribute to an increase in rigidity of each of the coupled portions.

Abutment surfaces of the horizontal support walls 20 and 20' and abutment surfaces of the vertical support walls 24 and 24' are disposed to form a right angle between each other. Therefore, it is possible to restrict the vertical and lateral movements of the garnish end plate 4 relative to the garnish body 3 by the abutment surfaces, to thereby further reliably prevent the displacement between them.

It will be understood that the present invention is not limited to the above-described embodiment, and various modifications in design may be made without departing from the scope of the invention defined in claims. For example, the present invention is also applicable to exterior parts other than the side sill garnish 2.

## Claims

1. A structure of coupling vehicle body exterior parts to each other, in which first and second exterior parts (3, 4) secured at their one-ends to spaced-apart portions of a vehicle body (1) are coupled at the other opposed ends to each other for sliding movement in a give direction (A),
**characterized in that** first and second support walls (20, 20'; 24, 24') are provided on one and the other of the first and second exterior parts (3, 4) to abut against each other for sliding movements in the given direction (A); a U-shaped groove (22, 26) is formed in said first support wall (20, 24) to extend in said given direction (A); and a T-shaped protrusion (23, 27) is formed on said second support wall (20', 24'), so that a neck of said T-shaped protrusion is slidably fitted in said U-shaped groove (22, 26).

2. A structure of coupling vehicle body exterior parts to each other according to claim 1, **characterized in that** at least two sets of the first and second support walls (20, 20'; 24, 24') are provided on the first and second exterior parts (3, 4), and abutment surfaces of the first and second support walls (20, 20'; 24, 24') in each set are disposed to form a right angle between them.

3. A structure of coupling vehicle body exterior parts to each other according to claim 1 or 2, **characterized in that** small ribs (29, 30) are formed on one of the abutment surfaces of said first and second support walls (20, 20' ; 24, 24') to resiliently contact with the other abutment surface.

## Patentansprüche

1. Struktur, um Fahrzeugkörperaußenteile miteinander zu kuppeln, bei der ein erstes und ein zweites Außenteil (3, 4), welche an ihren einen Enden an voneinander beabstandeten Abschnitten eines Fahrzeugkörpers (1) befestigt sind, an den anderen entgegengesetzten Enden miteinander für eine Schiebebewegung in einer vorgegebenen Richtung (A) gekuppelt sind,
**dadurch gekennzeichnet, dass** eine erste und eine zweite Tragwand (20, 20'; 24, 24') sowohl an dem ersten als auch dem zweiten Außenteil (3, 4) derart vorgesehen sind, dass sie für Schiebebewegungen in der vorgegebenen Richtung (A) aneinander anliegen; dass eine U-förmige Nut (22, 26) in der ersten Tragwand (20, 24) ausgebildet ist, um sich in der vorgegebenen Richtung (A) zu erstrecken; und dass ein T-förmiger Vorsprung (23, 27) an der zweiten Tragwand (20', 24') derart ausgebildet ist, dass ein Hals des T-förmigen Vorsprungs verschiebbar in die U-förmige Nut (22, 26) eingesetzt ist.

2. Struktur, um Fahrzeugkörperaußenteile miteinander zu kuppeln, gemäß Anspruch 1, **dadurch gekennzeichnet, dass** wenigstens zwei Sätze der ersten und der zweiten Tragwand (20, 20'; 24, 24') an dem ersten und dem zweiten Außenteil (3, 4) vorgesehen sind und dass Anlageflächen der ersten und der zweiten Tragwand (20, 20'; 24, 24') bei jedem Satz so angeordnet sind, dass sie einen rechten Winkel zwischen sich ausbilden.

3. Struktur, um Fahrzeugkörperaußenteile miteinander zu kuppeln, gemäß Anspruch 1 oder 2, **dadurch gekennzeichnet, dass** kleine Rippen (29, 30) an einer der Anlageflächen der ersten und der zweiten Tragwand (20, 20'; 24, 24') derart ausgebildet sind, dass sie mit der anderen Anlagefläche in elastischem Kontakt sind.

## Revendications

1. Structure de connexion de pièces extérieures de corps de véhicule les unes avec les autres, dans laquelle une première et une seconde pièce extérieure (3, 4) fixées à l'une de leurs extrémités sur des parties séparées d'un corps de véhicule (1) sont connectées l'une à l'autre aux autres extrémités opposées dans un mouvement coulissant dans une direction donnée (A),
**caractérisée en ce qu'**une première et une seconde paroi de support (20, 20' ; 24, 24') sont aménagées sur l'une et sur l'autre de la première et de la seconde pièce extérieure (3, 4) afin de venir en butée l'une contre l'autre dans un mouvement coulissant dans la direction donnée (A) ; une gorge en forme de U (22, 26) est formée dans ladite première paroi de support (20, 24) de manière à s'étendre dans ladite direction donnée (A) ; et une saillie en forme de T (23, 27) est formée sur ladite seconde paroi de support (20', 24'), de telle sorte qu'un rebord de ladite saillie en forme de T est monté en coulissement dans ladite gorge en forme de U (22, 26).

2. Structure de connexion de pièces extérieures de corps de véhicule les unes avec les autres selon la revendication 1, **caractérisée en ce qu'**au moins deux jeux de la première et de la seconde paroi de support (20, 20' ; 24, 24') sont aménagés sur la première et sur la seconde pièce extérieure (3, 4), et **en ce que** des surfaces de butée de la première et de la seconde paroi de support (20, 20' ; 24, 24') de chaque jeu sont disposées de manière à former un angle droit entre elles.

3. Structure de connexion de pièces extérieures de corps de véhicule les unes avec les autres selon la revendication 1 ou la revendication 2, **caractérisée en ce que** de petites nervures (29, 30) sont formées sur l'une des surfaces de butée de ladite première et de ladite seconde paroi de support (20, 20' ; 24, 24') afin d'entrer en contact élastique avec l'autre surface de butée.
